# NEUE EUROPÄISCHE PATENTSCHRIFT

(11) **EP 0 935 025 B2**
(45) Veröffentlichungstag und Bekanntmachung des Hinweises auf die Entscheidung über den Einspruch: **03.06.2015**
(45) Hinweis auf die Patenterteilung: 27.04.2005
(21) Anmeldenummer: 99102196.5
(22) Anmeldetag: 04.02.1999
(51) Int. Cl.: E01C 19/26, B62D 33/073

(54) **Bodenverdichtungsvorrichtung und Verfahren zur Steuerung des Fahrantriebes einer Bodenverdichtungsvorrichtung**
Soil compacting machine and method of controlling the drive of the same
Dispositif pour compacter le sol et sa méthode de réglage d'entraînement

(30) Priorität: 09.02.1998 DE 19804887
(43) Veröffentlichungstag der Anmeldung: 11.08.1999
(73) Patentinhaber: BOMAG GmbH, 56154 Boppard (DE)
(72) Erfinder: Schmidt, Christian Ing. grad., 56283 Halsenbach (DE); Schüler, Hartmut Dipl.-Ing. (FH), 56291 Badenhard (DE); Laux, Robert Dipl.-Ing. (FH), 56283 Halsenbach (DE)
(74) Vertreter: Lang, Friedrich

(56) Entgegenhaltungen:
- EP-A- 0 711 872
- DE-A1- 1 530 837
- DE-A1- 19 536 987
- DE-B- 1 108 092
- DE-C- 825 355
- DE-C1- 4 301 745
- DE-C2- 2 507 168
- DE-U1- 8 105 604
- FR-A- 2 531 116
- GB-A- 515 911
- US-A- 4 066 143
- US-A- 4 109 742

## Beschreibung

Die Erfindung betrifft eine Straßenwalze und ein Verfahren zu ihrer Fahrtsteuerung, wie sie in den Oberbegriffen der unabhängigen Ansprüche beschrieben sind.

Bei den immer größer werdenden Straßenwalzen besteht ein großes Problem für den Walzenführer darin, daß die Straßenwalzen dementsprechend unübersichtlicher werden, wodurch das Arbeiten mit solch vergrößerten Straßenwalzen aufwendiger und ein exaktes Steuern erschwert wird. Um das Problem der Unübersichtlichkeit der Straßenwalzen abzuschwächen, wurden bereits drehbare Fahrerkonsolen vorgeschlagen, durch die es dem Walzenführer möglich ist, seinen Fahrersitz so an den Rand der Straßenwalze zu verschwenken, daß er längs der Kanten der Walzenbandagen den Arbeitsbereich besser einsehen kann. Darüber hinaus wurden auch schon komplett verschiebbare Fahrerkabinen vorgeschlagen, die so weit verschoben werden können, daß sie teilweise über die Bandagenkanten hinausragen und hierdurch dem Walzenführer eine freie Sicht auf den unter Umständen problematischen Randbereich seiner Arbeitsfläche ermöglichen.

Einem gravierendem Problem wurde jedoch noch keine größere Achtung geschenkt, nämlich den schlechten Arbeitsbedingungen beim Wenden oder Zurücksetzen bzw. Rückwärtsfahren der Straßenwalze. Hierzu gibt es im Stand der Technik den Vorschlag, eine zweite Fahrerkonsole in der Fahrerkabine vorzusehen, die für das Fahren in der rückwärtigen Richtung verwendet wird, was aber zum einen die Straßenwalze entsprechend verteuert und zum anderen ein schnelles Arbeiten aufgrund des hierbei erforderlichen Konsolenwechsels unmöglich macht. Eine gattungsgemäße Straßenwalze ist aus DE 19536987 A1 bekannt.

Aus FR-A-2531116 ist eine Bodenverdichterwalze und ein Verfahren zu ihrer Fahrtsteuerung bekannt, bei der ein drehbar gelagerter Führerstand über ein hydraulisches System in seiner Position auf der Walze verändert werden kann. Dabei ändert ein Verschwenken des Führerstandes über einen Grenzwinkel von 90 Grad hinaus auch den Richtungssinn der Lenkvorrichtung ("organe de direction") der Walze.

Der Erfindung liegt die Aufgabe zugrunde, die Bedienung einer Straßenwalze der eingangs genannten Art weiter zu verbessern und das Bedienen im Hinblick auf Wendemanöver und Rückwärtsfahren weiter zu vereinfachen.

Diese Aufgabe wird mit den in den unabhängigen Ansprüchen angegebenen Merkmalen gelöst. Bevorzugte Weiterbildungen sind in den Unteransprüchen beschrieben.

Die Fahrerkonsole mit samt dem Fahrersitz ist weiter als 90° in eine rückwärtige Position zu verschwenken. Hierbei wird die neue Drehposition der Fahrerkonsole von der Erfassungsvorrichtung an die Steuerungsvorrichtung weitergegeben, die dann den Richtungssinn der Antriebsvorgaben umkehrt und mit den demgemäß umgekehrten Größen den Fahrantrieb steuert. Beispielsweise fährt der Walzenführer hierbei im Vorwärtsgang auch entsprechend der Orientierung der Fahrerkonsole in seiner Sitzvorrichtung vorwärts, selbst wenn die Fahrerkonsole in den rückwärtigen Inversbereich verschwenkt ist und die Straßenwalze eigentlich rückwärts fährt. Der Walzenführer muß hierbei also nicht berücksichtigen, welcher Walzenseite er gerade zugewandt ist, entscheidend ist lediglich die Orientierung seiner Fahrerkonsole, und entsprechend dieser Orientierung paßt die Steuerungsvorrichtung die Fahrtrichtung an seine Richtungsvorgaben an.

In diesem Zusammenhang ist es besonders vorteilhaft, wenn die Steuerungsvorrichtung auch den Lenkantrieb in Abhängigkeit der vom Walzenführer ausgewählten Lenkvorgaben und in Abhängigkeit der Drehposition der Fahrerkonsole steuert derart, daß bei einem Verschwenken der Fahrerkonsole in den voreingestellten Inversbereich die Steuerungsvorrichtung den Richtungssinn der Lenkvorgaben ebenfalls umkehrt. Somit wird nicht nur die Fahrtrichtung, sondern auch die Lenkrichtung an die Drehposition der Fahrerkonsole angepasst, so daß ein Lenken in einer bestimmten Richtung auch zu einem Verfahren der Walze von der Fahrerkonsole aus gesehen in dieser Richtung führt unabhängig davon, ob der Walzenführer gerade in Richtung der Walzenvorder- oder der Walzenrückseite orientiert ist.

Hierdurch und insbesondere durch das Zusammenwirken des Steuerns von Fahrantrieb und Lenkantrieb ergibt sich der besondere Vorteil, daß Wendemanöver der Straßenwalze gar nicht mehr durchgeführt werden müssen, daß vielmehr der Walzenführer immer in Vorwärtsrichtung fahren kann mit entsprechend unbeeinträchtigtem Sichtbereich und Arbeitsverhalten. Dementsprechend können auch komplizierte Rückwärtsfahrten nicht nur dadurch in einfache Vorwärtsfahrten umgewandelt werden, daß die Fahrerkonsole um mehr als 90° in rückwärtige Richtung verschwenkbar ist, sondern daß darüber hinaus auch die wichtigsten Bedienelemente mitverschwenkt werden und deren Richtungssinn an die neue Drehposition der Fahrerkonsole angepaßt werden.

Zweckmäßigerweise ist der Drehbereich der Fahrerkonsole hierbei aufgeteilt in einen Normalbereich, in dem die Steuerungsvorrichtung im Normalmodus arbeitet und den Lenk- und/oder Fahrantrieb entsprechend dem Richtungsinn der Lenk- und/öder Antriebsvorgaben steuert, und in einen Inversbereich, in dem die Steuerungsvorrichtung im Inversmodus arbeitet und den Richtungssinn der Antriebs- und/oder Lenkvorgaben umkehrt und den Lenk- und/oder Fahrantrieb entsprechend den invertierten Vorgaben steuert.

Normalbereich und Inversbereich sind hierbei durch einen Grenzbereich von einander getrennt, wobei bei einem Verschwenken der Fahrerkonsole in den Grenzbereich die Steuerungsvorrichtung die Verarbeitung des Richtungssinns der Antriebs- und/oder Lenkvorgaben umkehrt vom Normalmodus in den Inversmodus bzw. vom Inversmodus in den Normalmodus. Der Normalbereich sollte den Drehpositionen zugeordnet sein, in denen die Fahrerkonsole in Richtung der Walzenvorderseite orientiert ist, während der Inversbereich den Drehpositionen zugeordnet sein sollte, in denen die Fahrerkonsole in Richtung der Walzenrückseite orientiert ist, wobei der Grenzbereich etwa unter 90° zur Walzenlängsachse angeordnet sein sollte und entweder einen größeren Winkelbereich umfassen oder lediglich aus einer Grenzlinie bestehen kann.

Was die angesprochene Orientierung der Fahrerkonsole in Richtung der Walzenvorder- bzw. - rückseite betrifft, so bezieht sich diese jeweils auf die Ausrichtung des auf der Fahrerkonsole plazierten Walzenführers, wodurch die Orientierung der Fahrerkonsole in Richtung der Walzenvorderseite mit anderen Worten heißt, daß die Sitzfläche für den Walzenführer in Richtung der Walzenforderseite orientiert ist, während die Sitzrückseite in Richtung der Walzenrückseite gedreht ist. Zwar kann die Orientierung in Richtung der Walzenvorderseite ebenso wie die Orientierung in Richtung der Walzenrückseite einen Schwenkbereich von theoretisch jeweils 180° umfassen, wobei dann ein zweiter Grenzbereich zwischen Normalbereich und Inversbereich auf der anderen Walzenseite unter 90° zur Walzenlängsachse vorgesehen sein müßte. Jedoch ist es wohl am zweckmäßigsten, wenn der Schwenkbereich insgesamt nur etwa 270° beträgt, wodurch dem Walzenführer ausreichend Möglichkeiten zur Verdrehung der Fahrerkonsole gelassen wird, aber gleichzeitig die Kopplung der an der Fahrerkonsole vorgesehenen Bedienelemente mit der Steuerungsvorrichtung durch entsprechend der Position der Fahrerkonsole mitdrehbare Kabelstränge erhalten bleibt, während bei einer freien Verdrehbarkeit diese Kopplung entsprechend aufwendiger beispielsweise über umlaufende Schleifkontakte oder eine drahtlose Übertragung gestaltet sein müßte.

Am einfachsten erfolgt das Umschalten vom Normalmodus in den Inversmodus bzw. umgekehrt manuell, indem das Verschwenken der Fahrerkonsole im Grenzbereich blockiert wird und das Blockieren erst nach der manuellen Modus-Umschaltung durch den Walzenführer aufgehoben wird. Hierdurch läßt sich zum einen natürlich die von der Steuerungsvorrichtung durchgeführte Invertierung der Richtungsangaben erreichen, zum anderen wird aber auch der Walzenführer darauf vorbereitet, daß bei gleichbleibenden Stellungen seiner Bedienelemente eine Richtungsänderung erfolgen würde.

Ebenso ist es aber auch möglich, daß das Umschalten vom Normalmodus in den Inversmodus und umgekehrt automatisch erfolgt, indem dem Grenzbereich eine Modus-Umschaltvorrichtung zugeordnet ist, die den Verarbeitungsmodus der Steuerungsvorrichtung umschaltet, wenn die Fahrerkonsole den Grenzbereich überquert.

Wie bereits vorstehend angedeutet, ist es zweckmäßig, wenn die Antriebsvorgaben vom Walzenführer durch Bedienelemente eingegeben werden, und wenn die Antriebsrichtung vorwärts" der Bedienelemente im Normalmodus einem Walzenantrieb in Vorwärtsrichtung, also in Richtung der Walzenvorderseite, und im Inversmodus einem Walzenantrieb in Rückwärtsrichtung, also in Richtung der Walzenrückseite zugeordnet ist. Ebenso ist es zweckmäßig, daß die Lenkvorgaben vom Walzenführer durch Bedienelemente eingegeben werden, und daß die Lenkrichtung links" der Bedienelemente im Normalmodus einem Lenkantrieb in Linksrichtung, bezogen auf die von der Walzenrückseite zur Walzenvorderseite verlaufende Längsrichtung, und im Inversmodus einem Lenkantrieb in Rechtsrichtung zugeordnet ist. In diesem Zusammenhang ist zu berücksichtigen, daß bei einer Doppelschemellenkung eine Linkslenkung nicht dazu führt, daß beide Walzenbandagen nach links schwenken; vielmehr wird dort die vordere Bandage nach links geschwenkt, während die hintere Bandage bei normalem Lenkmodus in entgegengesetzter Richtung, als nach rechts schwenkt. Die Einschränkung auf einen normalen Lenkmodus" bezieht sich darauf, daß bei Einzelansteuerung von Walzenbandagen bzw. bei Umschalten in Hundegang-Fahrweise andere Ansteuerungseigenschaften vorliegen.

Unabhängig davon, ob das Umschalten manuell oder automatisch erfolgt, empfiehlt es sich auf jeden Fall, daß dieses nur bei stillstehender Walze durchgeführt wird, um ein Fehlsteuern durch den Walzenführer einerseits oder eine Störung der Steuerungsvorrichtung andererseits zu verhindern. Somit ist es vorteilhaft, wenn bei Überqueren des Grenzbereiches der Fahr- und/oder Lenkantrieb gestoppt werden.

Neben dem Verfahren zur Steuerung des Fahrantriebes einer Straßenwalze erstreckt sich die vorliegende Erfindung auch auf die Straßenwalze selbst, mit einer gegenüber der Walze und ihrem Fahrgestell drehbar angeordneten Fahrerkonsole, wobei die Fahrerkonsole zumindest einen Fahrersitz und Bedienelemente umfaßt, und wobei die Bedienelemente über eine Steuerungsvorrichtung mit einem Lenk- und/oder Fahrantrieb verbunden sind und zur Betätigung des Lenk- und/oder Fahrantriebs entsprechend der vom Walzenführer an den Bedienelementen ausgewählten Lenk- und/oder Antriebsvorgaben dienen.

Die erwähnten erfindungsgemäße Vorteile lassen sich durch die Straßenwalze dadurch erreichen, daß an die Fahrerkonsole eine Erfassungsvorrichtung zur Erfassung der Drehposition der Fahrerkonsole angeschlossen ist, daß die Erfassungsvorrichtung darüber hinaus an die Steuerungsvorrichtung zur Weitergabe der Drehposition der Fahrerkonsole angeschlossen ist, und daß die Steuerungsvorrichtung zur Steuerung des Richtungssinns des Lenk- und/oder Fahrantriebs entsprechend dem Richtungssinn der Lenk- und/oder Antriebsvorgaben unter Berücksichtigung der Drehposition der Fahrerkonsole dient. Gegenüber den bereits bezüglich des Steuerungsverfahrens aufgeführten Merkmalen zeichnet sich die Straßenwalze in vorteilhafter Weise noch dadurch aus, daß die Erfassungsvorrichtung aus einer Umschaltvorrichtung besteht, die bei Erreichen des Grenzbereichs ein Inverssignal an die Steuerungsvorrichtung weitergibt, woraufhin diese den Richtungssinn entsprechend dem Normal- bzw. Inversmodus beim Steuern des Fahr- und/oder Lenkantriebes berücksichtigt. Neben der ebenfalls bereits näher beschriebenen Umschaltvorrichtung, die entweder automatisch oder manuell ausgelöst werden kann, ist es besonders vorteilhaft, wenn eine dem Grenzbereich zugeordnete Blockiervorrichtung vorgesehen ist, die das Verschwenken über den Grenzbereich hinaus blockiert und an die Umschaltvorrichtung derart gekoppelt ist, dass die Blockiervorrichtung die Fahrerkonsole erst dann wieder freigibt, wenn die Umschaltvorrichtung aktiviert worden ist

Was die Erfassungsvorrichtung betrifft, so kann diese nicht nur aus einer vergleichsweise einfachen Umschaltvorrichtung, sondern auch aus einem Winkelsensor bestehen, der die Position der Fahrerkonsole abtastet und an die Steuerungsvorrichtung weitergibt. Diese steuert entsprechend den vom Winkelsensor erhaltenen Werten der Drehposition der Fahrerkonsole den Lenk- und/oder Fahrantrieb im Normalmodus oder im Inversmodus.

Besonders vorteilhaft ist es, wenn die Fahrerkonsole der Straßenwalze nicht bzw. nicht nur drehbar, sondern auch relativ vom Fahrgestell und einer hierauf angeordneten Fahrerkabine in Querrichtung verschieblich angeordnet ist, und zwar in solchem Masse, dass sie sich teilweise durch eine seitliche Öffnung der Fahrerkabine erstreckt und gegenüber der Außenseite teilweise vorsteht, wodurch die Überschaubarkeit der Straßenwalze und das Einsehen des kritischen Randbereiches der BandagenKanten verbessert werden.

Die Fahrerkonsole erstreckt sich hierbei zweckmäßigerweise in der seitlich vorstehenden Position durch das geöffnete Kabinenfenster mit zumindest einer gegebenenfalls die Bedienelemente tragenden Armlehne des Fahrersitzes, wodurch auch der Walzenführer aus dem geöffneten Fenster vorsteht und hierdurch die Walzen- und Bandagenkante besser einsehen kann. Schließlich ist es besonders vorteilhaft, wenn die Fahrerkonsole sowohl gegen das Verdrehen als auch gegen das Verschieben festlegbar ist und zwar durch eine gemeinsame lösbare Arretierungsvorrichtung, so dass der Walzenführer nur eine Arretierung lösen muss, will er seine Sitzposition gegenüber der Walze verändern.

Weitere Merkmale und Vorteile der vorliegenden Erfindung ergeben sich aus der nachfolgenden Beschreibung eines Ausführungsbeispieles anhand der Zeichnung; hierbei zeigen
Fig. 1 eine Straßenwalze in perspektivischer Seitenansicht;
Fig. 2 eine schematische Darstellung der Arbeitsweise einer erfindungsgemäßen Straßenwalze; und
Fig. 3 ein schematisches Schaltbild einer erfindungsgemäßen Straßenwalze.

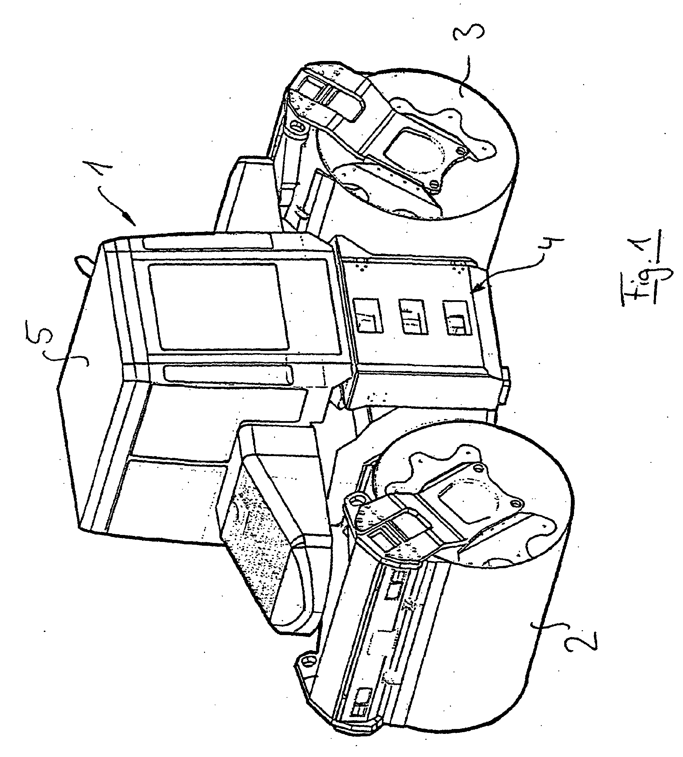

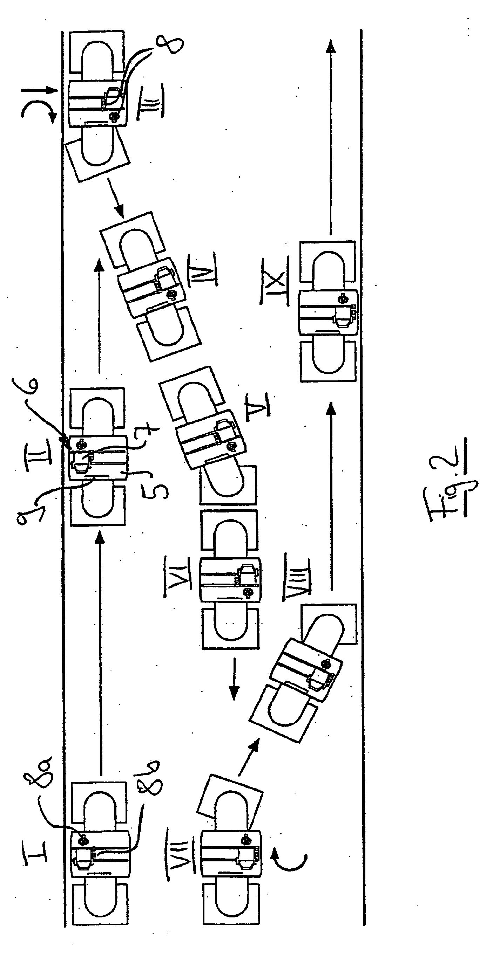

In Figur 1 ist eine Straßenwalze 1 in perspektivischer Seitenansicht dargestellt, die eine Doppelschemellenkung aufweist und hierdurch zwei einzeln lenkbare Walzenbandagen 2, 3 umfaßt. Die Walzenbandagen sind über ein Fahrgestell 4 miteinander verbunden, auf dem eine Fahrerkabine 5 angeordnet ist, in der eine - aus Figur 2 erkennbare - Fahrerkonsole 6 vorgesehen ist, die insbesondere einen Fahrersitz 7 und Bedienelemente 8 für den Walzenführer umfaßt.

Die Bedienelemente 8 bestehen insbesondere aus einem Lenkrad 8a und Fahrantriebshebeln 8b, die zum einen den Antriebsgang und zum anderen die Antriebsgeschwindigkeit steuern.

Die Erfindung ist nun aus Figur 2 ersichtlich, in der die Straßenwalze im oberen Bereich im Abschnitt I und II mit ihrer linken Walzenseite bzw. mit ihren linken Bandagenrändern an einem Straßenrand entlangfährt, wozu sich die Fahrerkonsole 6 innerhalb der Fahrerkabine 5 auf der in Fahrtrichtung linken Seite befindet und in Vorwärtsrichtung orientiert ist. Hierbei blickt der Walzenführer ebenfalls in - Vorwärtsrichtung und kann gleichzeitig den linken Walzenbereich und insbesondere die linken Bandagenkanten überblicken.

Im Abschnitt III hat er Walzenführer das Ende seines Arbeitsbereiches erreicht und müßte mit einer herkömmlichen Straßenwalze nun ein Wendemanöver beginnen, um sein weiteres Arbeiten ebenfalls in Vorwärtsrichtung durchführen zu können. Statt dessen wird in erfindungsgemäßer Weise in Abschnitt III die Fahrerkonsole um 180° verschwenkt, so daß der Walzenführer nun in Rückwärtsrichtung gegenüber der Ausrichtung der Straßenwalze orientiert ist. Gleichzeitig wird die Fahrerkonsole auch noch seitlich an den rechten Kabinenrand verschoben.

In diesem Zusammenhang sei darauf hingewiesen, daß sich die hier verwendeten Richtungsangaben wie etwa vorwärts" rückwärts", links" und rechts" jeweils auf die Längsrichtung der Straßenwalze von der hinteren Walzenbandage 2 zur vorderen Walzenbandage 3 beziehen, wobei sich diese Ausrichtung in Figur 2 lediglich daran erkennen läßt, daß die Fahrerkabine an ihrem rückwärtigen Mittelabschnitt zur Verdeutlichung mit einem schematisch angedeuteten Fenster 9 versehen ist.

Nach der Querverschiebung und Drehung der Fahrerkonsole 6 um 180°, bei der auch die Bedienelemente entsprechend mitverschwenkt werden, ist der Walzenführer genau in Richtung der rückwärtigen Walzenbandage orientiert und kann hierbei bei einem Zurücksetzen der Walze den Arbeitsbereich besser einsehen. Damit das Arbeiten im Verlaufe dieser nun erfolgenden Rückwärtsfahrt über die Stationen IV, V, VI bis zur Station VII nicht dadurch verkompliziert wird, daß der Walzenführer zwar in Fahrtrichtung orientiert ist, jedoch gleichzeitig berücksichtigen muß, daß er eigentlich rückwärts fährt, werden die Bedienelemente in erfindungsgemäßer Art und Weise mit dem Fahr- und Lenkantrieb derart gekoppelt, daß der jeweilige Richtungssinn der vom Walzenführer durchgeführten Lenkvorgaben umgekehrt wird. Legt der Walzenführer nun also in der in Abschnitt III dargestellten Position der Fahrerkonsole den Vorwärtsgang ein, so führt dies zum Antrieb der Straßenwalze in Rückwärtsrichtung bezogen auf die Straßenwalze, jedoch in Vorwärtsrichtung bezogen auf die Orientierung des Walzenführers. Ebenso würde der in Abschnitt III dargestellte Lenkeinschlag eigentlich einer Rechtslenkung bezogen auf die Orientierung der Straßenwalze entsprechen, bezogen auf die Orientierung der Fahrerkonsole stellt diese jedoch eine Linkslenkung dar.

Hierdurch wird die Position der Fahrerkonsole automatisch bei der Steuerung des Lenk- und Fahrantriebs berücksichtigt, so daß der Walzenführer sich nicht bei jedem Steuerungsvorgang vergegenwärtigen muß, in welcher Richtung gegenüber der Straßenwalze er nun eigentlich orientiert ist.

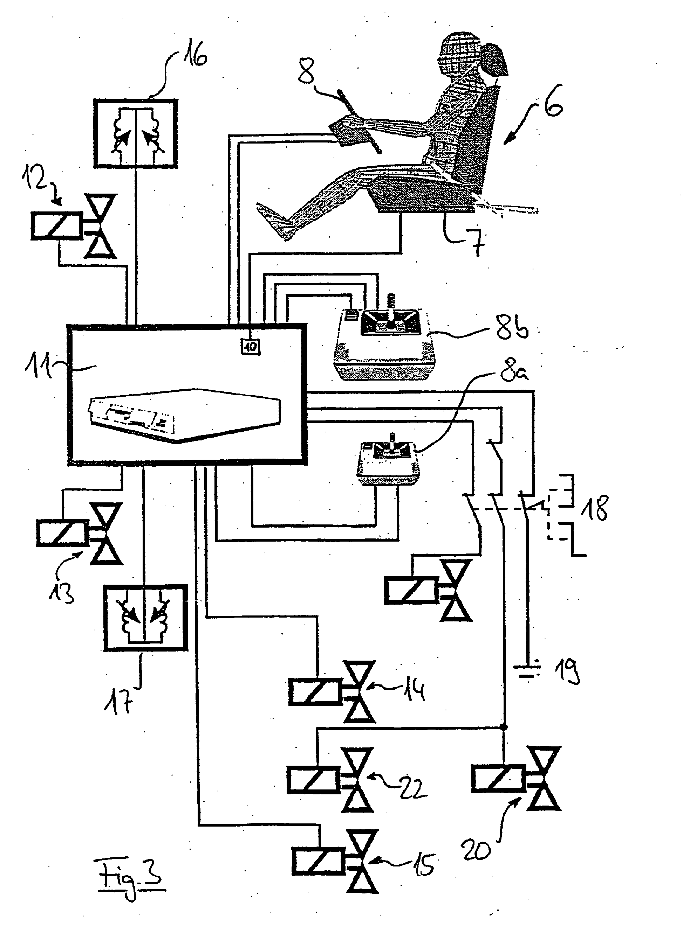

In Figur 3 ist dargestellt, wie die Steuerungsvorrichtung die Position des Walzenführers bei der Steuerung des Lenk- und Fahrantriebes berücksichtigen kann. Hierzu ist die Steuerungsvorrichtung 11 mit der aus Fahrersitz und Bedienelementen 8 bestehenden Fahrerkonsole 6 verbunden und an eine Erfassungsvorrichtung 12 zur Erfassung der Drehposition der Fahrerkonsole angeschlossen, wobei die Erfassungsvorrichtung bei der Ausführungsform in Figur 3 Bestandteil der Steuerungsvorrichtung ist. Der Drehbereich der Fahrerkonsole wird - unabhängig von deren Querverschiebung - aufgeteilt in einen Normalbereich und in einen Inversbereich, wobei der Normalbereich in Richtung der Walzenvorderseite orientiert ist und der Inversbereich den Drehpositionen zugeordnet ist, in denen die Fahrerkonsole in Richtung der Walzenrückseite orientiert ist. Bezogen auf Figur 2 befindet sich die Fahrerkonsole in den Abschnitten I, II, VII, VIII und IX im Normalbereich, während sie sich in den Abschnitten III, IV, V und VI im Inversbereich befindet.

Im Normalbereich arbeitet die Steuerungsvorrichtung 11 im Normalmodus, das heißt, der Richtungssinn der an den Bedienelementen 8, 8a und 8b eingegebenen Lenk- und Antriebsvorgaben wird bei der Steuerung des Lenk- und Fahrantriebes beibehalten. Hingegen bei im Inversbereich befindlicher Fahrerkonsole arbeitet die Steuerungsvorrichtung im Inversmodus, wobei der Richtungssinn der Lenk- und Antriebsvorgaben von der Steuerungsvorrichtung umgekehrt wird und der Lenk- und Fahrantrieb entsprechend den invertierten Vorgaben gesteuert wird.

Beim Steuerungsschema aus Figur 3 sind der Lenkantrieb durch ein vorderes Lenkantrieb-Steuerungsventil 12 und ein hinteres Lenkantrieb-Steuerungsventil 13 angedeutet, während der Fahrantrieb durch ein vorderes Fahrantrieb-Steuerventil 14 und ein hinteres Fahrantrieb-Steuerventil 15 angedeutet ist.

Die weiteren in Figur 3 dargestellten Schaltelemente 3 zeigen einen Lenkwinkelsensor 16 für die vordere Walzenbandage zur Erfassung ihres Lenkeinschlags, einen Lenkwinkelsensor 17 für die hintere Walzenbandage, einen Notausschalter 18, eine Batterie 19, ein Steuerungsventil 20 für die Bremse sowie ein Steuerungsventil 21 zum Ausschalten des Motors und ein Steuerungsventil 22 für die Fahrpumpe.

Der in Figur 3 dargestellte Joystick 8b dient zur Auswahl der Geschwindigkeit, während der Joystick 8a zur Auswahl der Lenkrichtung dient. Das bei der Fahrerkonsole 6 angedeutete Lenkrad 8 dient zur Verdeutlichung der Kombination von Fahrersitz und Bedienelemeten in der Fahrerkonsole und der gemeinsamen Verdrehbarkeit von Fahrersitz und Bedienelementen.

Ein wesentlicher Aspekt der vorliegenden Erfindung, nämlich die Querverschieblichkeit der Fahrerkonsole bis über den Kabinenrand hinaus durch insbesondere das geöffnete Kabinenfenster, ist in den Figuren nicht dargestellt. Hierzu sei jedoch angemerkt, daß dieses Verschieben nur dann möglich ist, wenn zuvor das Kabinenfenster in die geöffnete Stellung um 180° nach außen gegen die Kabinenaußenwand geklappt worden ist. Durch die extreme Querverschieblichkeit der Fahrerkonsole ist es dem Walzenführer möglich, ohne größere Anstrengungen seitlich an der Straßenwalze und der Bandagenkante entlang den kritischen Randbereich seines Arbeitsbereiches besser einzusehen. Hierbei muß er nicht seinen Fahrersitz verlassen, um sich eine optimale Blickposition zu verschaffen, wobei er sich gleichzeitig auch von den Bedienelementen entfernen würde; vielmehr bleibt der Walzenführer auf seinem Fahrersitz und verfährt diesen in die seitliche Extremstellung, wobei sich der Fahrersitz teilweise über die Außenseite der Fahrerkabine hinaus durch die Kabinenöffnung erstreckt. Hierbei wird dem Walzenführer nicht nur eine bequemere Arbeitsstellung ermöglicht, sondern er hat auch selbst in dieser Extremposition ständigen Zugriff auf die Bedienelemente, wodurch Fehlsteuerungen der Straßenwalze bzw. deren Lenk- oder Fahrantriebs weiter reduziert werden können.

Zusammenfassend bietet die vorliegende Erfindung den Vorteil, daß zum einen die Fahrerkonsole nun auch in die rückwärtige Position verschwenkbar ist, wodurch der Walzenführer diesen Bereich bei Rückwärtsfahrten besser einsehen kann; insbesondere aber sorgt die mitdenkende" Steuerungsvorrichtung, die ihre Informationen über eine mit der Fahrerkonsole verbundene Erfassungsvorrichtung erhält, dafür, daß der Walzenführer unabhängig von seiner eigentlichen Orientierung gegenüber der Straßenwalze den Fahr- und Lenkantrieb so steuern kann, wie es der Orientierung der Fahrerkonsole entspricht, er also diese bei seiner Steuerung nicht selbst berücksichtigen muß.

## Patentansprüche

1. Verfahren zur Steuerung einer Fahrt einer Straßenwalze (1) mit Doppelschemellenkung und zwei einzeln lenkbaren Walzenbandagen (2, 3), bei dem Fahrtvorgaben von einer Bedienungsperson über eine Steuerungsvorrichtung (11) an die Straßenwalze (1) übermittelt werden,
**dadurch gekennzeichnet,**
**dass** die Straßenwalze eine gegenüber der Walze und ihrem Fahrgestell (4) drehbar angeordnete Fahrerkonsole (6) aufweist, wobei bei einem Verschwenken der Fahrerkonsole (6) in einen voreingestellten Inversbereich der Richtungssinn der Fahrtvorgaben von der Steuerungsvorrichtung (11) umgekehrt wird, und
**dass** zumindest ein Teil der Fahrtvorgaben Antriebsvorgaben sind, die an einen Fahrantrieb (14, 15) der Straßenwalze (1) gerichtet sind und den Fahrantrieb (14,15) in Abhängigkeit der Drehposition der Fahrerkonsole (6) derart steuern, dass bei einem Verschwenken der Fahrerkonsole (6) in einen voreingestellten Inversbereich die Steuerungsvorrichtung (11) den Richtungssinn der zu übermittelnden Antriebsvorgaben umkehrt.

2. Verfahren nach Anspruch 1,
**dadurch gekennzeichnet,**
**dass** der Drehbereich der Fahrerkonsole (6) aufgeteilt ist in einen Normalbereich, in dem die Steuerungsvorrichtung (11) im Normalmodus arbeitet und zumindest den Fahrantrieb (14, 15) entsprechend dem Richtungssinn der Fahrtvorgaben steuert, und einen Inversbereich, in dem die Steuerungsvorrichtung (11) im Inversmodus arbeitet und den Richtungssinn der Fahrtvorgaben umkehrt und zumindest den Fahrantrieb (14, 15) entsprechend den invertierten Vorgaben steuert.

3. Verfahren nach Anspruch 2,
**dadurch gekennzeichnet,**
**dass** der Normalbereich vom Inversbereich durch einen Grenzbereich getrennt ist, und dass bei Erreichen des Grenzbereichs die Steuerungsvorrichtung (11) die Verarbeitung des Richtungssinns zumindest der Antriebsvorgaben vom Normalmodus in den Inversmodus bzw. vom Inversmodus in den Normalmodus umschaltet.

4. Verfahren nach einem der Ansprüche 2 bis 3,
**dadurch gekennzeichnet,**
**dass** der Normalbereich den Drehpositionen zugeordnet ist, in denen die Fahrerkonsole (6) in Richtung der Vorderseite der Straßenwalze (1) orientiert ist, und dass der Inversbereich den Drehpositionen zugeordnet ist, in denen die Fahrerkonsole (6) in Richtung der Rückseite der Straßenwalze (1) orientiert ist.

5. Verfahren nach Anspruch 3,
- **dadurch gekennzeichnet,**
**dass** der Grenzbereich etwa unter 90° zur Längsachse der Straßenwalze (1) angeordnet ist.

6. Verfahren nach Anspruch 2,
**dadurch gekennzeichnet,**
**dass** das Umschalten vom Normalmodus in den Inversmodus bzw. vom Inversmodus in den Normalmodus manuell erfolgt, indem das Verschwenken der Fahrerkonsole (6) im Grenzbereich blockiert wird und das Blockieren erst nach der manuellen Modus-Umschaltung durch den Walzenführer aufgehoben wird.

7. Verfahren nach Anspruch 2,
**dadurch gekennzeichnet,**
**dass** das Umschalten vom Normalmodus in den Inversmodus bzw. vom Inversmodus in den Normalmodus automatisch erfolgt, indem dem Grenzbereich eine Modus-Umschaltvorrichtung zugeordnet ist, die den Verarbeitungsmodus der Steuerungsvorrichtung (11) umschaltet, wenn die Fahrerkonsole (6) den Grenzbereich überquert.

8. Verfahren nach Anspruch 7,
**dadurch gekennzeichnet,**
**dass** das Umschalten des Verarbeitungsmodus bei stillstehender Straßenwalze (1) erfolgt.

9. Verfahren nach Anspruch 3,
**dadurch gekennzeichnet,**
**dass** bei Überqueren des Grenzbereiches die Fahrt der Straßenwalze (1) gestoppt wird.

10. Straßenwalze (1) mit Doppelschemellenkung und zwei einzeln lenkbaren Walzenbandagen (2, 3),
**dadurch gekennzeichnet,**
**dass** die Straßenwalze eine gegenüber der Walze und ihrem Fahrgestell (4) drehbar angeordnete Fahrerkonsole (6) aufweist, wobei die Fahrerkonsole (6) zumindest einen Fahrersitz (7) und Bedienelemente (8, 8a, 8b) umfasst, und wobei die Bedienelemente (8, 8a, 8b) über eine Steuerungsvorrichtung (11) mit zumindest einem Antrieb (12, 13) verbunden sind und zur Betätigung des Antriebs (12, 13) entsprechend der vom Walzenführer an den Bedienelementen (8, 8a, 8b) ausgewählten Fahrtvorgaben dienen, wobei an die Fahrerkonsole (6) eine Erfassungsvorrichtung (10) zur Erfassung der Drehposition der Fahrerkonsole (6) angeschlossen ist, dass die Erfassungsvorrichtung (10) an die Steuerungsvorrichtung (11) zur Weitergabe der Drehposition der Fahrerkonsole (6) angeschlossen ist, und
**dass** die Steuerungsvorrichtung (11) zur Steuerung des Richtungssinns zumindest des Fahrantriebs (14, 15) entsprechend dem Richtungssinn der Fahrtvorgaben unter Berücksichtigung der Drehposition der Fahrerkonsole (6) dient.

11. Straßenwalze nach Anspruch 10,
**dadurch gekennzeichnet,**
**dass** die Fahrerkonsole (6) in eine rückwärtige Orientierung drehbar ist, und dass sich der Drehbereich zumindest über 180°, insbesondere aber über 270°, erstreckt.

12. Straßenwalze nach einem der vorstehenden Ansprüche 10 oder 11,
**dadurch gekennzeichnet,**
**dass** der Drehbereich der Fahrerkonsole (6) aufgeteilt ist in einen Normalbereich und einen Inversbereich.

13. Straßenwalze nach Anspruch 12,
**dadurch gekennzeichnet,**
**dass** die Steuerungsvorrichtung (11) bei im Normalbereich befindlicher Fahrerkonsole (6) den Richtungssinn zumindest des Fahrantriebs (14, 15) entsprechend dem Richtungssinn der Fahrtvorgaben im Normalmodus steuert, und dass sie bei im Inversbereich befindlicher Fahrerkonsole (6) den Richtungssinn der Fahrtvorgaben umkehrt und zumindest den Fahrantrieb (14, 15) entsprechend den invertierten Vorgaben im Inversmodus steuert.

14. Straßenwalze nach Anspruch 12,
**dadurch gekennzeichnet,**
**dass** der Normalbereich vom Inversbereich durch einen Grenzbereich getrennt ist, und dass bei Erreichen des Grenzbereiches die Steuerungsvorrichtung (11) die Verarbeitung des Richtungssinnes der Fahrtvorgaben vom Normalmodus in den Inversmodus bzw. vom Inversmodus in den Normalmodus umschaltet.

15. Straßenwalze nach Anspruch 12,
**dadurch gekennzeichnet,**
**dass** der Normalbereich den Drehpositionen zugeordnet ist, in denen die Fahrerkonsole (6) in Richtung der Walzenvorderseite orientiert ist, und dass der Inversbereich den Drehpositionen zugeordnet ist, in denen die Fahrerkonsole (6) in Richtung der Walzenrückseite orientiert ist.

16. Straßenwalze nach Anspruch 14,
**dadurch gekennzeichnet,**
**dass** der Grenzbereich etwa unter 90° zur Längsachse der Straßenwalze (1) angeordnet ist.

17. Straßenwalze nach Anspruch 11,
**dadurch gekennzeichnet,**
**dass** die Erfassungsvorrichtung (10) aus einer Umschaltvorrichtung besteht, die bei Erreichen des Grenzbereichs ein Invertiersignal an die Steuerungsvorrichtung (11) weitergibt.

18. Straßenwalze nach Anspruch 14,
**dadurch gekennzeichnet,**
**dass** eine dem Grenzbereich zugeordnete Blockiervorrichtung vorgesehen ist, die das Verschwenken über den Grenzbereich hinaus blockiert.

19. Straßenwalze nach Anspruch 18 und Anspruch 17,
**dadurch gekennzeichnet,**
**dass** die Blockiervorrichtung an die Umschaltvorrichtung angekoppelt ist derart, dass die Blockiervorrichtung die Fahrerkonsole (6) freigibt, nachdem die Umschaltvorrichtung aktiviert worden ist.

20. Straßenwalze nach Anspruch 11 und Anspruch 13,
**dadurch gekennzeichnet,**
**dass** die Erfassungsvorrichtung (10) aus einem Winkelsensor besteht, und dass die Steuerungsvorrichtung (11) entsprechend den vom Winkelsensor erhaltenen Werten über die Drehposition der Fahrerkonsole (6) den zumindest einen Antrieb (12,13, 14,15) im Normalmodus oder im Inversmodus steuert.

21. Straßenwalze nach Anspruch 11, mit einer gegenüber der Walze (1) und ihrem Fahrgestell (4) drehbar angeordneten Fahrerkonsole (6), wobei die Fahrerkonsole (6) zumindest einen Fahrersitz (7) umfasst,
**dadurch gekennzeichnet,**
**dass** die Fahrerkonsole (6) relativ zum Fahrgestell (4) der Vorrichtung (1) und einer hierauf angeordneten Fahrerkabine (5) in Querrichtung verschieblich angeordnet ist in solchem Maße, dass sie sich in Querrichtung zumindest teilweise durch eine seitliche Öffnung der Fahrerkabine (5) erstreckt und gegenüber deren Außenseite teilweise vorsteht.

22. Straßenwalze nach Anspruch 21,
**dadurch gekennzeichnet,**
**dass** sich die Fahrerkonsole (6) in der seitlich vorstehenden Position zumindest teilweise durch das geöffnete Kabinenfenster erstreckt.

23. Straßenwalze nach Anspruch 22,
**dadurch gekennzeichnet,**
**dass** der seitlich vorstehende Teil der Fahrerkonsole (6) zumindest aus einer Armlehne des Fahrersitzes (7) besteht.

24. Straßenwalze nach Anspruch 23,
**dadurch gekennzeichnet,**
**dass** die seitlich vorstehende Armlehne Bedienelemente (8a, b) zur Steuerung der Lenkung (12, 13) der Straßenwalze (1) trägt.

25. Straßenwalze nach einem der vorstehenden Ansprüche 11 bis 24,
**dadurch gekennzeichnet,**
**dass** die Fahrerkonsole (6) gegen Verdrehen und Verschieben festlegbar ist, und dass das Festlegen durch eine gemeinsame lösbare Arretierungsvorrichtung erfolgt.

## Claims

1. Method for controlling the travel of a road roller (1) with dual pivot steering and two individually steerable roller drums (2, 3), wherein travel commands from an operator are transmitted via a control device (11) to the road roller (1),
**characterized in that**
the road roller comprises a driver's console (6) arranged so as to be able to swivel with respect to the road roller and its chassis (4), wherein the directional orientation of the travel commands is reversed by the control device (11) when the driver's console (6) swivels in a preset reverse range, and
that at least a part of the travel commands are drive commands which are addressed to a travel drive (14, 15) of the road roller (1) and which control the travel drive (14, 15) depending on the swivel position of the driver's console (6) such that the control device (11) reverses the directional orientation of the drive commands to be transmitted when the driver's console (6) swivels in a preset reverse range.

2. The method according to claim 1,
**characterized in that**
the swivel range of the driver's console (6) is divided into a standard range, in which the control device (11) works in the standard mode and controls at least the travel drive (14, 15) in accordance with the directional orientation of the travel commands, and a reverse range, in which the control device (11) works in the reverse mode and reverses the directional orientation of the travel commands and controls at least the travel drive (14, 15) in accordance with the reversed commands.

3. The method according to claim 2,
**characterized in that**
the standard range is separated from the reverse range by a threshold range, and that, when the threshold range is reached, the control device (11) switches over the processing of the directional orientation of at least the drive commands from the standard mode into the reverse mode and from the reverse mode into the standard mode, respectively.

4. The method according to any one of claims 2 to 3,
**characterized in that**
the standard range is assigned to the swivel positions in which the driver's console (6) is oriented in the direction of the front side of the road roller (1), and that the reverse range is assigned to the swivel positions in which the driver's console (6) is oriented in the direction of the rear side of the road roller (1).

5. The method according to claim 3,
**characterized in that**
the threshold range is arranged approximately under 90° to the longitudinal axis of the road roller (1).

6. The method according to claim 2
**characterized in that**
the switchover from the standard mode to the reverse mode and from the reverse mode to the standard mode, respectively, takes place manually **in that** the swiveling of the driver's console (6) is blocked in the threshold range and will be unblocked only after manual mode switchover by the road roller operator.

7. The method according to claim 2,
**characterized in that**
the switchover from the standard mode to the reverse mode and from the reverse mode to the standard mode, respectively, takes place automatically **in that** a mode switchover device is assigned to the threshold range, which switches over the processing mode of the control device (11) when the driver's console (6) passes the threshold range.

8. The method according to claim 7,
**characterized in that**
the switchover of the processing mode takes place when the road roller (1) is standing still.

9. The method according to claim 3,
**characterized in that**
the travel of the road roller (1) is halted when the threshold range is passed.

10. Road roller (1) with dual pivot steering and two individually steerable roller drums (2, 3),
**characterized in that**
the road roller comprises a driver's console (6) arranged so as to be able to swivel with respect to the road roller and its chassis (4), the driver's console (6) comprising at least a driver's seat (7) and operating elements (8, 8a, 8b), said operating elements (8, 8a, 8b) being connected via a control device (11) to at least one drive (12, 13) and serving for the actuation of said drive (12, 13) in accordance with the travel commands selected by the road roller operator at the operating elements (8, 8a, 8b), a detection device (10) for the detection of the swivel position of the driver's console (6) being connected to the driver's console (6),
that the detection device (10) is connected to the control device (11) for transmitting the swivel position of the driver's console (6), and
that the control device (11) serves for controlling the directional orientation of at least the travel drive (14, 15) in accordance with the directional orientation of the travel commands taking into account the swivel position of the driver's console (6).

11. The road roller according to claim 10,
**characterized in that**
the driver's console (6) can swivel in a reverse orientation and that the swivel range covers at least 180 degrees and particularly over 270 degrees.

12. The road roller according to any one of preceding claims 10 or 11,
**characterized in that**
the swivel range of the driver's console (6) is divided into a standard range and a reverse range.

13. The road roller according to claim 12,
**characterized in that**
when the driver's console (6) is positioned within the standard range, the control device (11) controls the directional orientation of at least the travel drive (14, 15) in accordance with the directional orientation of the travel commands in the standard mode, and that, when the driver's console (6) is positioned within the reverse range, the control device reverses the directional orientation of the travel commands and controls at least the travel drive (14, 15) in accordance with the reversed commands in the reverse mode.

14. The road roller according to claim 12,
**characterized in that**
the standard range is separated from the reverse range by a threshold range, and that, when the threshold range is reached, the control device (11) switches over the processing of the directional orientation of the travel commands from the standard mode to the reverse mode and from the reverse mode to the standard mode, respectively.

15. The road roller according to claim 12,
**characterized in that**
the standard range is assigned to the swivel positions in which the driver's console (6) is oriented in the direction of the front side of the roller, and that the reverse range is assigned to the swivel positions in which the driver's console (6) is oriented in the direction of the rear side of the roller.

16. The road roller according to claim 14,
**characterized in that**
the threshold range is arranged approximately under 90° to the longitudinal axis of the road roller (1).

17. The road roller according to claim 11,
**characterized in that**
the detection device (10) consists of a switchover device that transmits a reverse signal to the control device (11) when the threshold range is reached.

18. The road roller according to claim 14,
**characterized in that**
a blocking device assigned to the threshold range is provided, which blocks any swiveling beyond the threshold range.

19. The road roller according to claim 18 and claim 17,
**characterized in that**
the blocking device is coupled to the switchover device such that the blocking device unblocks the driver's console (6) after the switchover device has been activated.

20. The road roller according to claim 11 and claim 13,
**characterized in that**
the detection device (10) consists of an angle sensor, and that the control device (11) controls the at least one drive (12, 13, 14, 15) in the standard mode or in the reverse mode in accordance with the values received by the angle sensor about the swivel position of the driver's console (6).

21. The road roller according to claim 11, with a driver's console (6) arranged so as to be able to swivel with respect to the road roller (1) and its chassis (4), the driver's console (6) comprising at least a driver's seat (7),
**characterized in that**,
relative to the chassis (4) of the device (1) and a driver's cabin (5) arranged thereon, the driver's console (6) is arranged so as to be displaceable in a transverse direction to such an extent that it extends at least partially through a lateral opening of the driver's cabin (5) in transverse direction and partially protrudes relative to its outside surface.

22. The road roller according to claim 21,
**characterized in that**,
in its laterally protruding position, the driver's console (6) at least partially extends through the opened cabin window.

23. The road roller according to claim 22,
**characterized in that**
the laterally protruding part of the driver's console (6) consists of at least an armrest of the driver's seat (7).

24. The road roller according to claim 23,
**characterized in that**
the laterally protruding armrest carries operating elements (8a, b) for controlling the steering mechanism (12, 13) of the road roller (1).

25. The road roller according to any one of the preceding claims 11 to 24,
**characterized in that**
the driver's console (6) can be fixed against swiveling and displacement, and that the fixation occurs by means of a common releasable locking device.

## Revendications

1. Procédé de commande du déplacement d'un rouleau compresseur (1) avec direction à double pivot et deux cylindres (2, 3) dirigeables de manière individuelle, dans lequel des commandes de déplacement provenant d'un opérateur sont transmises, par l'intermédiaire d'un dispositif de commande (11), au rouleau compresseur (1),
**caractérisé en ce que**
le rouleau compresseur comprend une console conducteur (6) agencée de manière à pouvoir pivoter par rapport au rouleau compresseur et à son châssis (4), l'orientation directionnelle des commandes de déplacement étant inversée par le dispositif de commande (11) quand la console conducteur (6) pivote dans une plage d'inversion prédéfinie, et
*en ce qu*'au moins une partie des commandes de déplacement sont des commandes d'entraînement qui sont envoyées à un entraînement (14, 15) de déplacement du rouleau compresseur (1) et qui commandent l'entraînement (14, 15) de déplacement en fonction de la position de pivotement de la console conducteur (6) de telle manière que le dispositif de commande (11) inverse l'orientation directionnelle des commandes d'entraînement à transmettre quand la console conducteur (6) pivote dans une plage d'inversion prédéfinie.

2. Procédé selon la revendication 1,
**caractérisé en ce que**
la plage de pivotement de la console conducteur (6) est subdivisée en une plage normale dans laquelle le dispositif de commande (11) fonctionne en mode normal et commande au moins l'entraînement (14, 15) de déplacement conformément à l'orientation directionnelle des commandes de déplacement, et une plage d'inversion, dans laquelle le dispositif de commande (11) fonctionne en mode inverse et inverse l'orientation directionnelle des commandes de déplacement, et commande au moins l'entraînement (14, 15) de déplacement conformément aux commandes inversées.

3. Procédé selon la revendication 2,
**caractérisé en ce que**
la plage normale est séparée de la plage d'inversion par une plage limite, et **en ce que**, quand on atteint la plage limite, le dispositif de commande (11) fait basculer le traitement de l'orientation directionnelle d'au moins les commandes d'entraînement, respectivement du mode normal en mode inverse et du mode inverse en mode normal.

4. Procédé selon l'une quelconque des revendications 2 à 3,
**caractérisé en ce que**
la plage normale est associée aux positions de pivotement dans lesquelles la console conducteur (6) est orientée en direction de l'avant du rouleau compresseur (1), et **en ce que** la plage d'inversion est associée aux positions de pivotement dans lesquelles la console conducteur (6) est orientée en direction de l'arrière du rouleau compresseur (1).

5. Procédé selon la revendication 3,
**caractérisé en ce que**
la plage limite est située approximativement à moins de 90° par rapport à l'axe longitudinal du rouleau compresseur (1).

6. Procédé selon la revendication 2,
**caractérisé en ce que**
le basculement, respectivement du mode normal au mode inverse et du mode inverse au mode normal, s'effectue manuellement en bloquant le pivotement de la console conducteur (6) dans la plage limite et en ne levant le blocage qu'après le changement manuel de mode par le conducteur du rouleau compresseur.

7. Procédé selon la revendication 2,
**caractérisé en ce que**
le basculement, respectivement du mode normal en mode inverse et du mode inverse en mode normal, s'effectue automatiquement, par le fait qu'un dispositif de changement de mode est associé à la plage limite, qui bascule le mode de traitement du dispositif de commande (11) lorsque la console conducteur (6) franchit la plage limite.

8. Procédé selon la revendication 7,
**caractérisé en ce que**
le basculement du mode de traitement s'effectue lorsque le rouleau compresseur (1) est à l'arrêt.

9. Procédé selon la revendication 3,
**caractérisé en ce que**
le déplacement du rouleau compresseur (1) est stoppé lors du franchissement de la plage limite.

10. Rouleau compresseur (1) avec direction à double pivot et deux cylindres (2, 3) dirigeables de manière individuelle,
**caractérisé en ce que**
le rouleau compresseur comprend une console conducteur (6) agencée de manière à pouvoir pivoter par rapport au rouleau compresseur et à son châssis (4), la console conducteur (6) comprenant au moins un siège conducteur (7) et des éléments de commande (8, 8a, 8b), lesdits éléments de commande (8, 8a, 8b) étant reliés par un dispositif de commande (11) à au moins un entraînement (12, 13) et servant à actionner ledit entraînement (12, 13) conformément aux commandes de déplacement sélectionnées par l'opérateur du rouleau compresseur sur les éléments de commande (8, 8a, 8b), un dispositif de détection (10) pour la détection de la position de pivotement de la console conducteur (6) étant raccordé à la console conducteur (6), ***en ce que*** le dispositif de détection (10) est raccordé au dispositif de commande (11) pour transmettre la position de pivotement de la console conducteur (6), et **en ce que** le dispositif de commande (11) sert à commander l'orientation directionnelle d'au moins l'entraînement de déplacement (14, 15) en fonction de l'orientation directionnelle des ordres de déplacement en tenant compte de la position de pivotement de la console conducteur (6).

11. Rouleau compresseur selon la revendication 10,
**caractérisé en ce que**
la console conducteur (6) peut tourner dans une orientation inverse, et **en ce que** la plage de pivotement couvre au moins 180°, en particulier 270°.

12. Rouleau compresseur selon l'une quelconque des revendications 10 ou 11,
**caractérisé en ce que**
la plage de pivotement de la console conducteur (6) est divisée en une plage normale et une plage d'inversion.

13. Rouleau compresseur selon la revendication 12,
**caractérisé en ce que**
lorsque la console conducteur (6) se trouve dans la plage normale, le dispositif de commande (11) commande l'orientation directionnelle d'au moins l'entraînement (14, 15) de déplacement conformément à l'orientation directionnelle des commandes de déplacement en mode normal, et **en ce que**, quand la console conducteur (6) se trouve dans la plage d'inversion, le dispositif de commande inverse l'orientation directionnelle des commandes de déplacement et commande au moins l'entraînement (14, 15) de déplacement en mode inverse conformément aux commandes inversées.

14. Rouleau compresseur selon la revendication 12,
**caractérisé en ce que**
la plage normale est séparée de la plage d'inversion par une plage limite, et **en ce que**, quand on atteint la plage limite, le dispositif de commande (11) bascule le traitement de l'orientation directionnelle des commandes de déplacement, respectivement du mode normal en mode inverse et du mode inverse en mode normal.

15. Rouleau compresseur selon la revendication 12,
**caractérisé en ce que**
la plage normale est associée aux positions de pivotement dans lesquelles la console conducteur (6) est orientée en direction de l'avant du rouleau compresseur, et **en ce que** la plage d'inversion est associée aux positions de pivotement dans lesquelles la console conducteur (6) est orientée en direction de l'arrière du rouleau compresseur.

16. Rouleau compresseur selon la revendication 14,
**caractérisé en ce que**
la plage limite est disposée approximativement à moins de 90° par rapport à l'axe longitudinal du rouleau compresseur (1).

17. Rouleau compresseur selon la revendication 11,
**caractérisé en ce que**
le dispositif de détection (10) est constitué d'un dispositif inverseur qui transmet un signal d'inversion au dispositif de commande (11) lorsqu'on atteint la plage limite.

18. Rouleau compresseur selon la revendication 14,
**caractérisé en ce que**
un dispositif de blocage associé à la plage limite est prévu, qui bloque tout pivotement au-delà de la plage limite.

19. Rouleau compresseur selon la revendication 18 et la revendication 17,
**caractérisé en ce que**
le dispositif de blocage est couplé au dispositif inverseur de telle manière que le dispositif de blocage libère la console conducteur (6) après que le dispositif inverseur ait été activé.

20. Rouleau compresseur selon la revendication 11 et la revendication 13,
**caractérisé en ce que**
le dispositif de détection (10) est composé d'un capteur d'angle, et **en ce que** le dispositif de commande (11) commande ledit au moins un entraînement (12, 13, 14, 15) en mode normal ou mode inverse en fonction des valeurs reçues du capteur d'angle à propos de la position de pivotement de la console conducteur (6).

21. Rouleau compresseur selon la revendication 11, avec une console conducteur (6) agencée de manière à pouvoir pivoter par rapport au rouleau compresseur (1) et à son châssis (4), la console conducteur (6) comprenant au moins un siège conducteur (7),
**caractérisé en ce que**
par rapport au châssis (4) du rouleau (1) et à une cabine conducteur (5) placée sur celui-ci, la console conducteur (6) est agencée de manière à être déplaçable dans une direction transversale de telle sorte qu'elle s'étende au moins partiellement à travers une ouverture latérale de la cabine conducteur (5) dans une direction transversale et forme saillie partiellement par rapport à sa face extérieure.

22. Rouleau compresseur selon la revendication 21,
**caractérisé en ce que**
dans la position en saillie latérale, la console conducteur (6) s'étend au moins partiellement à travers la fenêtre ouverte de la cabine.

23. Rouleau compresseur selon la revendication 22,
**caractérisé en ce que**
la partie en saillie latérale de la console conducteur (6) se compose au moins d'un accoudoir du siège conducteur (7).

24. Rouleau compresseur selon la revendication 23,
**caractérisé en ce que**
l'accoudoir en saillie latérale porte des éléments de commande (8a, b) pour commander le mécanisme de direction (12, 13) du rouleau compresseur (1).

25. Rouleau compresseur selon l'une quelconque des revendications 11 à 24,
**caractérisé en ce que**
la console conducteur (6) peut être immobilisée en pivotement et en déplacement, et **en ce que** l'immobilisation s'effectue au moyen d'un dispositif de verrouillage libérable, commun.
